# EUROPEAN PATENT APPLICATION

(11) **EP 2 073 375 A1**
(43) Date of publication of application: **24.06.2009**
(21) Application number: 07123819.0
(22) Date of filing: 20.12.2007
(51) Int. Cl.: H02P 23/04, H02P 29/00

(54) **Apparatus for avoiding torque components at critical frequencies in machine drive systems**

(71) Applicant: GENERAL ELECTRIC COMPANY, Schenectady, NY 12345 (US)
(72) Inventor: Vyas, Parag, 80797, Munich (DE); Sihler, Christof, D-85399, Hallbergmoos (DE); Schroeder, Stefan, 80797, Muenchen (DE); Baller, Marko, 66130, Saarland (DE)
(74) Representative: Bedford, Grant Richard

(57) **Abstract**

Applying different embodiments of this invention controls torque components at critical frequencies. In the first, the control is applied without using a speed signal and without attempting to actively damp the shaft 20 resonance, instead the machine 18 is controlled to avoid producing a torque component at the critical frequencies by estimating the torque disturbances from machine voltage and/or current measurements. The second embodiment uses a signal-processing algorithm enabling the use of standard speed encoders 22 to measure the small angular displacements caused by torsional oscillations in mechanical shafts. The third embodiment superimposes a signal from a damping controller 70 to the output signal of a speed or torque controller, the damping controller signal having been determined by a mathematical algorithm applied to a signal from a contactless torque measurement with suitable signal conditioning.

## Description

The embodiments disclosed herein relate generally to machine drive systems and more particularly to damping of torsional vibrations in such systems.

Prime movers (e.g., gas turbines or electrical motors) are typically connected to their respective loads (e.g., electric generators or compressors) by a mechanical shaft, which may exhibit resonance at one or more critical frequencies excited by the power drive and/or by the load. If a torque component at a critical frequency is generated, then the shaft will experience torque oscillations, which can lead to an increase in fatigue and reduction in the life of the shaft. In extreme cases, if such modes are excited, severe damage to the system may result, leading to down time and expensive repairs. From the electrical drive, the source of the torque components can be voltage harmonics present due to the nature of output modulators in voltage converters or due to the presence of other current or voltage disturbances within the electrical network in connection with the machine. Another main cause for torsional issues in electrical motor driven shaft assemblies are air-gap torque harmonics generated by the electrical drive system.

Torsional vibration resonance problems are most frequently encountered in rotor systems with long shafts and large inertias, constituting a weakly damped mechanical resonator that exhibits one or more low resonance frequencies in the range of 15-70 Hz. Typically, the spring stiffness constant of a shaft in a high power system (10 MW and above) tends to be very high (of the order of 10⁸ Nm/rad), thus leading to high torque oscillations with minimal angular displacements that are too small to be resolved by speed encoders processed using a traditional method of counting the number of pulses per sampling interval. In highly underdamped systems, very high peak values of torque may be observed.

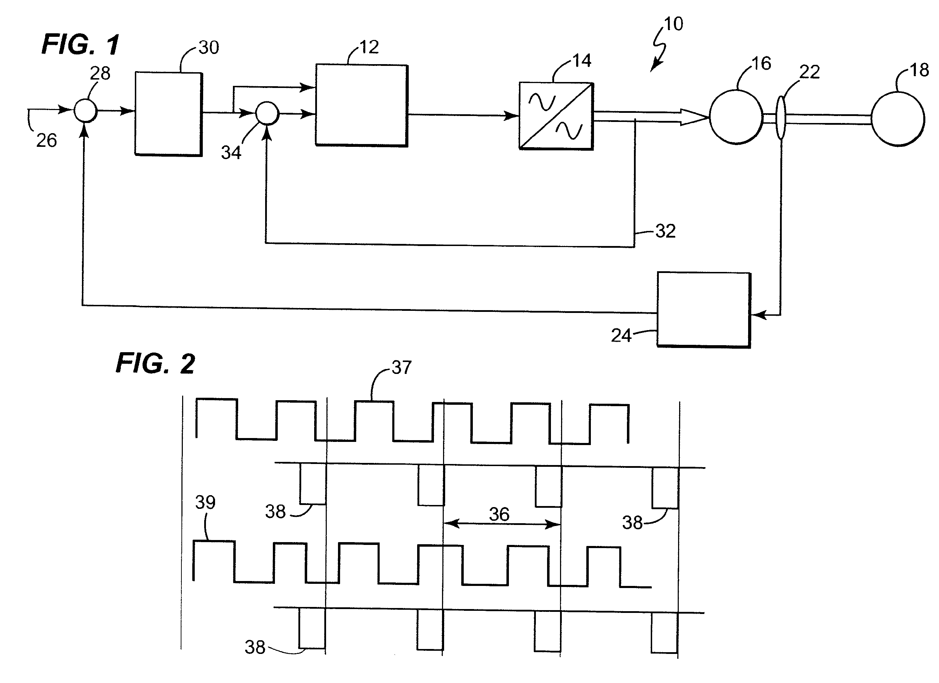

FIG. 1 illustrates a conventional drive controller 10 having a conventional speed encoder. As illustrated, a current controller 12 provides drive commands to a machine drive 14 to turn on and off the electrical power to drive an electric machine 16 connected to a mechanical load 18 by a mechanical shaft 20. In an outer speed-controller loop, speed encoder pulses from a speed encoder 22 mounted to the mechanical shaft 20 are provided to a speed estimator device 24, the output of which is compared to a speed reference signal 26 at a first signal summation element 28 and fed to a speed controller 30 so that a reference current may be derived. As it known, typically, such systems operate at low bandwidths - close to DC. In an inner loop, measured current signals 32 are fed back and compared to the reference current from the speed controller 30 at a second signal summation element 34 and fed to the current controller 12. As shown, feed forward information from the speed controller 30 is also supplied to the current controller 12.

FIG. 2 illustrates the operation of a conventional encoder as a function of time. As understood by those of ordinary skill, in a conventional encoder, the approach is to measure the number of pulses between sample periods 36. Curve 37 represents the output from an encoder rotating at a constant speed as a function of time. The signal-processing algorithm runs with a sample period illustrated by the vertical bars. One sample period is the time between two successive vertical bars. In a conventional encoder algorithm the output is the number of pulses encountered from the encoder output within the sample time period. In the illustration there are always two pulses per sample period, which is shown by the bar 38 with height of two units that are marked at the end of each sample period. Curve 39 represents the output from an encoder rotating at a fundamental frequency with a harmonic superimposed, which is seen in the curve 39 by the variation of widths of the "high" and "low" phases of the pulses. Application of the conventional encoder algorithm to curve 39 still results on an output of 2 units at the end of each sample period, as shown by the bars 38 with height of two units, thus resulting on the superimposed harmonic signal going undetected.

Usually the only feedback signals coming from the rotating shaft are speed and/or position signals that are derived from a shaft encoder. Methods of active damping of the mechanical shaft using measurement signals provided by speed encoders have been published. In smaller drive systems, a speed control loop can be used to damp the mechanical oscillations in the shaft. This is possible since the shaft spring stiffness values can be relatively small, and traditional speed encoders can resolve the oscillations in angular displacement. The encoders register an output signal proportional to the speed of the shaft by typically counting the number of pulses produced by an optical or magnetic sensor within a given sampling period. In the noted cases of shafts with large spring stiffness constants, angular displacements caused by torque oscillations will have amplitudes below the resolution of the encoder, in which case the torque oscillation can no longer be observed in the encoder signal, thus resulting in failure to damp shaft resonance torque oscillations in typical high power applications. In some applications in the Oil & Gas industry, the choice of speed encoder is limited by the need for certified operation in explosive environments. Separate torque sensors have been proposed but require a special design to exclude that an additional point of failure is introduced in applications requiring a high level of reliability.

The industrial state-of-the-art method of torque disturbance rejection involves control loops consisting of proportional and integral (P+I) terms and a combination of coordinate transforms to translate the fundamental electrical frequency of the machine to DC. The effect of the integral term is to provide high control gain at low frequencies in order to obtain high performance. However the tracking performance of these loops are limited to low bandwidths. The practical constraint to increasing either of the P or I terms is the loss of closed loop stability in the system. Online torque measurements would improve feedback for a torque controller, but state-of-the-art measurements are not used in drive trains with high stiffness parameters because they are either not sufficiently accurate or too expensive or as noted above would lead to an additional point of failure.

It would therefore be desirable, in systems provided with a speed encoder, to improve the performance of existing speed encoders so as to enable one to predict and control torsional components at critical frequencies even for systems with high stiffness parameters. It would also be desirable to predict and control torsional components at critical frequencies without relying on a signal from an encoder and instead control the machine to avoid producing a torque component at the critical frequency, thereby avoiding exciting a resonant mode. In addition, it would also be desirable to control torsional vibrations in mechanical shafts using contactless torque sensors located at a relevant shaft position in combination with suitable signal conditioning to enable damping via an electrical motor driven by a voltage source converter for actively damping unwanted torque vibrations.

In one embodiment according to the present invention, avoidance of torque components at critical frequencies is accomplished without reliance on a speed signal from an encoder and without attempting to actively damp the shaft resonance. Instead the machine is controlled to avoid producing a torque component at the critical frequency, thereby avoiding the excitation of a resonant mode. One realization would be the use of a bandpass filter to isolate the critical frequencies allows the implementation of high controller gains, without loss of loop stability, as would be the case with standard P+I loops. An additional controller algorithm is required to enable improved rejection of torque disturbance components whilst maintaining nominal controller performance requirements such as speed and/or torque tracking and robust stability. In this application the concept can be extended to single input multi output loops in the case where a torque or estimated torque signal input is provided and two or more current reference signals can be controlled. The controller can be extended to include the torque state estimator. The modulator voltage signals, including both the reference and/or the measured output, could be incorporated to allow for the prediction of harmonic disturbances.

In another embodiment, avoidance of torque components at critical frequencies in machine drive systems is accomplished by superimposing a relatively small oscillating signal from a damping controller to the output signal of a torque controller. In such systems, the oscillating signal, having a frequency (or frequencies) corresponding to (a) natural frequency (or frequencies) of the rotor shaft assembly, is derived from one (or more) contactless torque measurement(s) and suitable signal conditioning.

In yet another embodiment, avoidance of torque components at critical frequencies is accomplished by the use of a signal processing algorithm enabling the use of standard speed encoders to measure the small angular displacements caused by torsional oscillations in mechanical shafts. The signal is used within a damping control algorithm to operate an electric power converter connected to an electric machine attached to the shaft.

One or more of the above-summarized needs or others known in the art are addressed by torsional mode damping systems to reduce a torque component at a critical frequency in an output torque of an electric machine, these systems including a machine drive to control an electric power supplied to the electric machine; a sensor to measure a machine current at the output of the machine drive; a torque estimator processor to estimate an output torque from the machine current measured by the sensor; and a torque disturbance controller to generate a torque disturbance at the critical frequency combined to the current reference signal.

Torsional mode damping systems to reduce a torque component at a critical frequency in an output torque of an electric machine connected to a load by a shaft within the scope of subject matter disclosed also include a machine drive to control an electric power supplied to the electric machine; a speed sensor coupled to the shaft; an encoder signal processor unit to derive a speed of the shaft based on an output from the speed sensor; and a torque disturbance controller to generate a torque disturbance at the critical frequency based on the speed of the shaft derived by the encoder signal processor unit, the torque disturbance being combined to an output of the current controller.

Torsional mode damping systems within the scope of subject matter disclosed also include a machine drive to control an electric power supplied to an electric machine; a contactless torque sensor disposed adjacent to the shaft; a signal conditioner to receive a torque signal from the contactless torque sensor; and a torque disturbance controller to generate a torque disturbance at the critical frequency based on the conditioned torque signal from the signal conditioner, the torque disturbance being superimposed to an output of the current controller.

The above brief description sets forth features of the various embodiments of the present invention in order that the detailed description that follows may be better understood, and in order that the present contributions to the art may be better appreciated. There are, of course, other features of the invention that will be described hereinafter and which will be for the subject matter of the appended claims.

In this respect, before explaining several embodiments of the invention in detail, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which the disclosure is based, may readily be utilized as a basis for designing other structures, methods, and/or systems for carrying out the several purposes of the present invention. It is important, therefore, that the claims be regarded as including such equivalent constructions insofar as they do not depart from the spirit and scope of the present invention.

A more complete appreciation of the disclosed embodiments of the invention and many of the attendant advantages thereof will be readily obtained as the same becomes better understood by reference to the following detailed description when considered in connection with the accompanying drawings, wherein:
FIG. 1 illustrates a conventional nominal controller with a speed encoder;
FIG. 2 illustrates a conventional encoder to measure number of pulses between sample periods;
FIG. 3 illustrates a controller with a torque disturbance rejection loop according to an embodiment of the subject matter disclosed on a machine control loop with current reference signal derived from a speed or torque control loop;
FIG. 4 illustrates a controller with an improved speed encoder algorithm according to an embodiment of the subject matter disclosed;
FIG. 5 illustrates torsional mode damping control driven from a torque sensor with signal conditioning to eliminate static torque and disturbance signals according to an embodiment of the subject matter disclosed; and
FIG. 6 illustrates an enhanced encoder algorithm according to an embodiment of the disclosed subject matter.

The embodiments disclosed herein relate generally to machine drive systems and more particularly to damping of torsional vibrations in such systems. As used herein throughout, a machine drive system may include an electrical machine driven by a power converter connected to a mechanical load via a mechanical shaft, or, in generation applications, it may also include a rotating mechanical source of torque (gas turbine, wind turbine rotor) connected to a generator via a mechanical shaft. As it will become apparent to those of ordinary skill in the applicable arts, three different embodiments to address torsional oscillations in rotating mechanical shaft systems connected to electrical drives are disclosed, including the cases where (1) a direct torque sensor is available, (2) a torque sensor is not feasible, but a speed encoder exists, and (3) neither a speed encoder or torque sensor are available. As such, those of ordinary skill will appreciate that the various embodiments disclosed are not dependent on each other, i.e., each may be implemented without the other and various combinations are within the scope of the subject matter disclosed, as it will become apparent. Referring now to the drawings, wherein like reference numerals designate identical or corresponding parts throughout the several views, several embodiments of the improved apparatuses for avoiding torque components at critical frequencies in machine drive systems will be described.

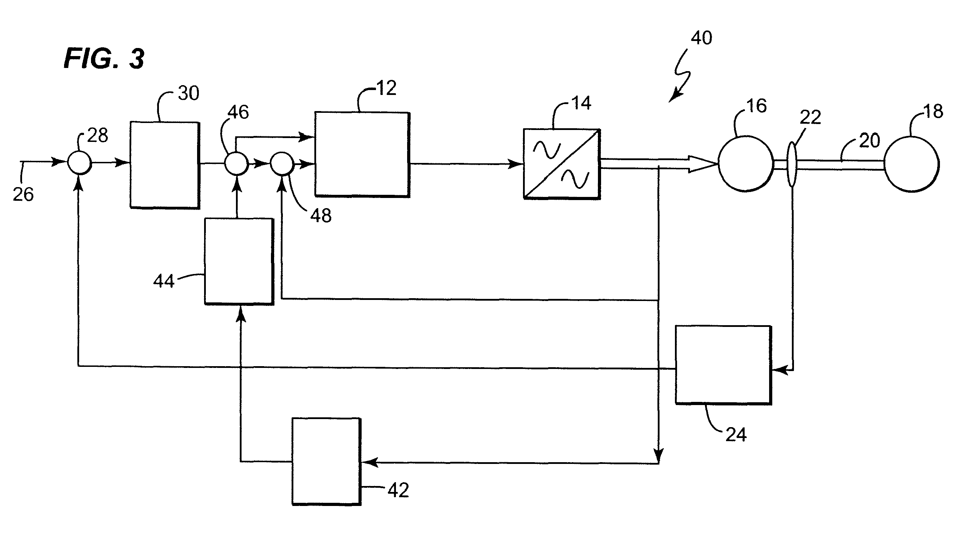

FIG. 3 illustrates an embodiment of the subject matter disclosed, in which a torque disturbance rejection loop 40 is illustrated on a machine control loop with current reference signal derived from a speed or torque control loop. As illustrated, the current controller 12 provides drive commands to the machine drive 14 to turn on and off the electrical power to drive the electric machine 16 connected to the mechanical load 18 by the mechanical shaft 20. In the outer speed-controller loop, speed encoder pulses from the speed encoder 22 mounted to the mechanical shaft 20 are provided to the speed estimator device 24, the output of which is compared to the speed reference signal 26 at the first signal summation element 28 and fed to the speed controller 30 so that a reference current may be derived. Measurement of the electric machine currents and/or voltages is supplied to a torque estimator 42 to derive an estimate of the output torque of the electric machine 18. The torque estimate from the torque estimator 42 is then band-pass filtered with filter frequency centered around the critical frequency corresponding to the resonance mode of the mechanical shaft 20 at a torque disturbance controller 44. The output from the torque disturbance controller 44 is then added to the current reference signal provided by the rest of the control apparatus in the machine drive system at a second signal summation element 46 so as to control the resonance modes of the mechanical shaft 20. The existing machine drive current control loops are used to regulate the machine currents so as to avoid resonance modes of the mechanical shaft 20. In the inner loop, measured current signals 32 are fed back and compared to the reference signal from the second summation element 46 at a third signal summation element 48 and fed to the current controller 12. As shown, feed forward information from the second summation element 46 is also supplied to the current controller 12.

Those of ordinary skill in the applicable arts will appreciate after consideration of the subject matter just described that one of the advantageous features of the embodiment of FIG. 3 is that a high performance feedback loop is used to reject torque harmonic disturbances at a critical frequency range and an encoder with sufficiently high resolution to measure angular displacements due to mechanical shaft oscillations is not required. In high power applications where shaft-stiffness has high values, it is often the case that the encoder does not have sufficiently high resolution to allow active damping of the mechanical shaft. Torque disturbances at the critical frequencies can be rejected by the embodiment of FIG. 3, whether they are due to voltage harmonic disturbances caused by the modulation process of the converter, including non-ideal switching behavior, or if they are caused by other devices which can be the case with parallel connection of converters. The torque disturbance loop 40 operates independently of the modulation process. This is useful for variable speed drives where the fundamental electrical output frequency and the carrier frequency of the modulation process can be changing, which in turn means that the frequencies of the harmonic disturbances are also changing. The method is applicable to both generating and motoring systems.

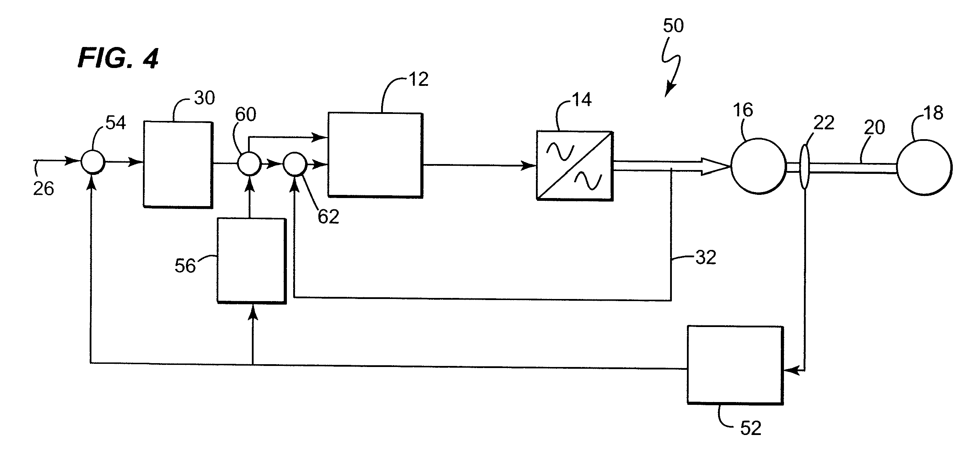

FIG. 4 illustrates another embodiment of the subject matter disclosed, in which a torque disturbance rejection loop 50 with enhanced speed encoder resolution is represented. As shown, the current controller 12 provides drive commands to the machine drive 14 based on to turn on and off power controlling the electrical power to drive the electric machine 16 connected to the mechanical load 18 by the shaft 20. In order to provide torque disturbances signal for the control of resonance modes of the mechanical shaft 20, signals from the speed encoder 22 are supplied to an enhanced encoder algorithm signal processor 52. The improved speed encoder signals are subtracted from the speed reference signal 26 at a first summation element 54 and also provided to a torque disturbance controller 56, whose output signal is added to the output of the speed controller 30 at a second summation element 60 to form drive command signals with a frequency content that will dampen the resonance modes of the mechanical shaft 20. In the inner loop, measured current signals 32 are fed back and compared to the reference signal from the second summation element 60 at a third signal summation element 62 and fed to the current controller 12. As shown, feed forward information from the second summation element 60 is also supplied to the current controller 12.

As shown in FIG. 4, the system comprises a loop using the encoder 22, the enhanced encoder signal processor 52, the torque disturbance feedback controller 56 for damping the resonant mode, and the electrical drive system that includes the current controller 12. The enhanced encoder signal processor 52 derives the mechanical shaft speed to a sufficiently high accuracy, such that even small rotational amplitudes associated with torsional resonances in stiff shaft assemblies can be measured. The encoder 22 is a standard encoder that is selected and calibrated offline using high precision measurements. A data table is stored in a signal-processing device (not shown) to encode the calibrated angular displacement between each pulse. In online operation, the time between pulses is detected by a high frequency clock and time measurement system and compared to the calibration data. The system is then able to accurately determine the speed of the encoder at each pulse to a high resolution rather than at each sampling interval. Two orders of magnitude improvement in the encoder resolution is calculated for a nominal high power system (30MW, 50Hz mechanical speed, 4000-line encoder).

The accurate speed signal determined by the enhanced encoder signal processor 52 is combined with the torque disturbance controller 56, which includes tuned filters and/or a combination of state estimators and state feedback matrices. The damping signal can be added to the existing electrical machine regulation algorithms or can be included directly in the design of the machine regulators. The algorithm determines the voltage and current reference commands sent to a power electronic converter. The damping controller algorithm is structured in such a way that it responds only to the resonant mode frequencies, and introduces small (of the order of 1% of the nominal) energy perturbations since the torsional resonant modes tend to have high Q values. The converter is connected to the electrical machine, which in turn is connected to the mechanical shaft. One of the advantageous features of the combination of the enhanced signal processing on the encoder with an oscillation-damping algorithm is that the electrical machine generates a torque, which in response to the shaft dynamics, acts to dampen the resonant mode. Thus, an enhanced approach of signal processing and data obtained from calibration is used to improve the resolution of a standard encoder, the enhanced speed signal being then used by a controller-damping algorithm that commands an electrical converter and machine system to generate a torque to counteract and dampen a resonant mode in the system. Examples of practical applications include, but are not limited to, oil and gas compressor drives and high power wind turbines. The embodiment of FIG. 4 can actively damp torsional modes in a mechanical shaft. The modes occur due to shaft resonances that can be excited from both the electrical drive side and/or from the load side. Using a speed encoder avoids the need for an additional torque sensor in many cases since not all torsional modes can be measured at the motor, thus improving reliability. The use of standard encoders is beneficial in applications where only certified encoders can be used as, for example, in explosive environments encountered in oil and gas applications.

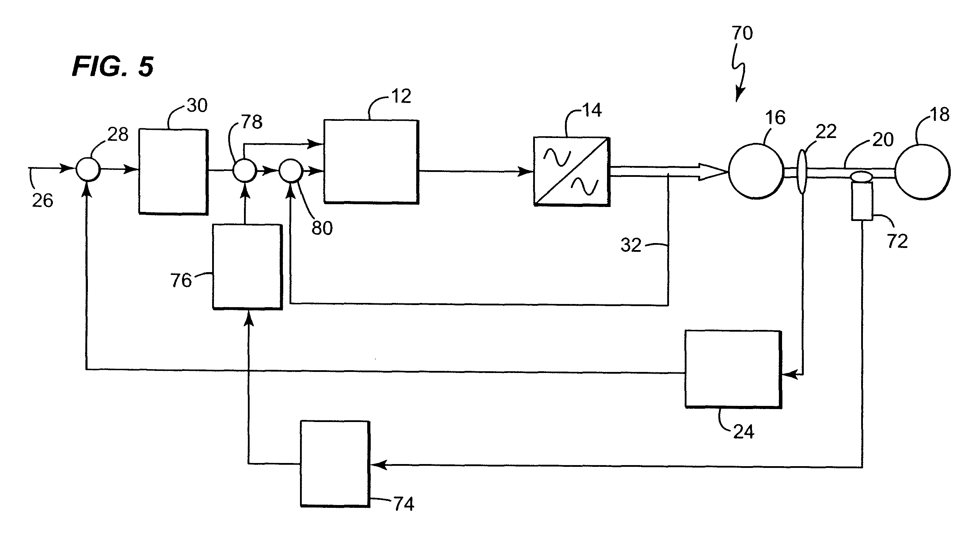

FIG.5 illustrates yet another embodiment of the subject matter disclosed, in which a torsional mode damping control 70 is represented driven from a torque sensor 72 with signal conditioning to eliminate static torque and disturbance signals. As shown, the speed controller 12 provides drive commands to the machine drive 14 to turn on and off the electrical power to drive the electric machine 16 connected to the mechanical load 18 by the shaft 20. In an intermediate speed-control loop, speed encoder pulses from the speed encoder 22 mounted to the mechanical shaft 20 are provided to the speed estimator device 24, the output of which is compared to the speed reference signal 26 at the first signal summation element 28 and fed to the speed controller 30 so that a reference current may be derived.

In conventional system with large voltage source converters, torque control is used in numerous applications. Usually the only feedback signals coming from the rotating shaft are speed and/or position signals and are derived from a shaft encoder. As noted before, in high power drive trains the resolution of shaft encoders is not sufficient to accurately measure torsional vibrations, due to the high stiffness of the rotor shaft assembly. Online torque measurements are the preferred feedback for a torque controller, but those of ordinary skill in the art know that such measurements are typically not used in drive trains because they are either not sufficiently accurate or expensive.

As noted in FIG. 5, in order to improve accuracy and reduce cost, in the torsional mode damping control 70 the torque sensor 72 is a contactless sensor based on a magnetostrictive effect that enables torque measurements with high stability. Examples for such sensors are given in "Method and System for Non-contact Sensing of the Torque of a Shaft," European Patent Application No. 07113363.1-1242 (filed on July 7, 2007, hereinafter the '363 patent, the contents of which are incorporated herein by reference in its entirety) and in "Torque Sensor", US Patent No. 7,243,557, issued on July 17, 2007, hereinafter the '557 patent, the contents of which are incorporated herein by reference in its entirety. Because raw magnetostrictive signals from the torque sensor 72 may contain some disturbance signals, a signal conditioner 74 is used to improve the feedback torque signal supplied to a torque-damping controller 76. The signal conditioner is described in more detail in the '363 patent.

Since torsional mode damping methods are normally based on feedback signals with typically one defined frequency, the quality of the raw signal can easily be improved by the same signal conditioner 74, e. g. by a band-pass filter or more complex signal conditioning (e. g. in subtracting the signals from two of these sensors being 180° displaced along the shaft circumference, in order to eliminate disturbances with a frequency corresponding to the speed of the shaft). Most advantageous from a reliability point of view is the use of magnetically encoded shafts with multiple secondary sensors for measuring the magnetic field (see the '557 patent for examples). These secondary sensors are very low cost. Installing multiple redundant secondary sensors enables one to achieve the required level of reliability, even if single secondary sensors start to fail after a couple of years of operation. The output of the torque damping controller 76 is then added to the output of the speed controller 30 at a second summation element 78 to supply a modified current reference for the current controller 12. The current controller 12 will form drive command signals with a frequency content that will not excite and/or dampen the resonance modes of the mechanical shaft 20. In the inner loop of FIG. 5, measured current signals 32 are fed back and compared to the reference signal from the second summation element 78 at a third signal summation element 80 and fed to the current controller 12. As shown, feed forward information from the second summation element 78 is also supplied to the current controller 12.

As understood by those of ordinary skill in the art, torsional mode damping feedback circuits are sensitive to dead times, e.g. being caused by simple signal conditioners, such as band-pass filters. However, the impact of the dead times can be easily compensated in this application. Therefore, a contactless torque sensor in combination with a suitable signal conditioner can be used to get a low cost, but high accuracy signal containing the amplitude and phase information of the most relevant mechanical torque harmonics. The signal from the torque sensor 72 described herein can be used to control torque disturbances for torsional issues caused by load commutated inverters as described in United States Patent No. 7,173,399 and United State Patent Application with Serial No. 11/381,900 (filed on May 5, 2006), both commonly assigned to the assignee of this application and incorporated herein by reference in their entirety.

Those of ordinary skill in the applicable arts after review of the subject matter disclosed herein will appreciate that the torsional mode damping controller 70 based on torque measurements with an economical torque sensor and a suitable signal conditioner interface with a voltage source converter would be simple to realize as a low cost and easy to install (retrofit) solution against torsional issues being caused by large voltage source converters.

Since the most relevant torsional vibrations correspond to frequencies below 100 Hz, or even lower, they can be damped in applying electrical damping torques to the rotating shaft (via the electrical motor driven by the voltage source converter). For active damping, accurate information from the mechanical drive train is required (more accurate than what can be delivered by encoders in stiff shaft assemblies). A low cost (magnetostrictive torque sensor located at a relevant shaft position in combination with suitable signal conditioning can deliver this information. This seems better suited than other (especially indirect) sensing methods or estimators because torsional vibrations are caused by very small air-gap torque harmonics (e. g. 1 % effects). Trying to measure or to estimate them with sufficient accuracy may not be possible with existing sensors (e. g. with current sensors that may not have an accuracy better than a few per-mille of the nominal current, especially in the real operating environment of a high power drive train). Thus, the torque mode damping controller 70 of FIG. 5 can be utilized without having to change the existing power or drive system (e. g. as a retro-fit solution), can be applied at very low costs, requires low engineering effort (can be based on standard components), can be sufficiently reliable (e. g. in using redundant torque sensors), can be built and tested before knowing technical details of specific applications (same design for different VSC applications, can easily be tuned and tested on site), and can be applied and tested during a string test (requires only a small signal interface to the existing torque controller).

Thus, as shown in FIG. 5, torque vibrations can also be controlled by superimposing a relatively small oscillating signal from a damping controller to the signal of an existing VSC torque controller, the amplitude of the oscillating signal being not higher than 1-2 % of the nominal torque. The frequencies of these small oscillating signals, derived from one (or more) contactless torque measurement(s) and suitable signal conditioning, are chosen to correspond to (a) natural frequency (or frequencies) of the rotor shaft assembly.

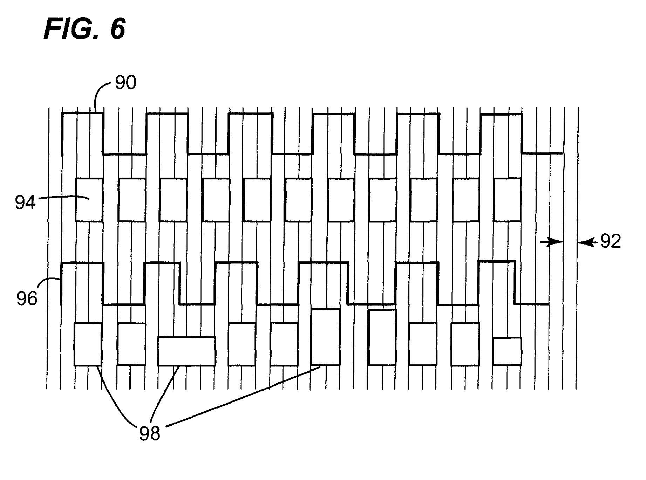

FIG. 6 illustrates an exemplary embodiment of an enhanced encoder algorithm according to an embodiment of the disclosed subject matter. In the illustrated figure, equidistant vertical lines represent high resolution clock pulses 92 capable of measuring accurately the time between pulses 90, thus allowing the recovery of harmonic components from the measured pulses by use of a Field Programmable Gate Array, or FPGA, (200 MHz+) to measure the time between pulses. Pulses 90 represent a pulse sequence of an encoder rotating at a fixed speed. The disclosed enhanced algorithm is configured to count the number of samples within each "high" and "low" phase of the pulse. For the fixed speed encoder pulses 90, the output is a constant three units every three sample periods, as shown in the pulses 94, since the algorithm encounters three samples periods per transition from high to low or vice versa of the pulses. Curve 96 is the output of an encoder rotating at the same fundamental frequency as curve 90, but with a harmonic frequency superimposed. For the encoder experiencing harmonic variations in speed, the output varies between two, three or four units, as shown by the bars 98 due to the changing number of sample periods encountered between transitions of the pulse sequence. Thus, with the enhanced encoder algorithm of FIG. 6, the variations due to the harmonic frequency component of curve 96 are present in the output of the encoder.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims.

Hence, the proper scope of the disclosed innovations should be determined only by the broadest interpretation of the appended claims so as to encompass all such modifications, changes, and omissions. In addition, the order or sequence of any process or method steps may be varied or re-sequenced according to alternative embodiments. Finally, in the claims, any means-plus-function clause is intended to cover the structures described herein as performing the recited function and not only structural equivalents, but also equivalent structures.

Various aspects and embodiments of the present invention are now defined in the following numbered clauses:
1. A torsional mode damping system to reduce a torque component at a critical frequency in an output torque of an electric machine, the system comprising:
   a machine drive configured to control an electric power supplied to the electric machine based on a drive command generated by a current controller from a current reference signal;
   a sensor configured to measure a machine current at the output of the machine drive;
   a torque estimator processor configured to estimate an output torque from the machine current measured by the sensor; and
   a torque disturbance controller configured to generate a torque disturbance at the critical frequency combined to the current reference signal.
2. The system according to clause 1, wherein the torque disturbance controller further comprises a band-pass filter to generate the torque disturbance.
3. The system according to any preceding clause, wherein a frequency of the band-pass filter is centered on the critical frequency.
4. The system according to any preceding clause, wherein the electric machine is coupled to a load through a mechanical shaft.
5. The system according to any preceding clause, wherein the electric machine, the load, and the mechanical shaft form a weakly damped mechanical resonator.
6. The system according to any preceding clause, wherein the torque estimator processor operates separately from a modulation process of the electric machine.
7. The system according to any preceding clause, wherein the torque component is generated by a voltage harmonic disturbance in the modulation process.
8. The system according to any preceding clause, wherein machine drive is a variable speed drive.
9. The system according to any preceding clause, further comprising:
   a second current reference signal, wherein the torque disturbance controller is configured to generate a torque disturbance at the critical frequency combined to the current reference signal and the second current reference signal.
10. A torsional mode damping system to reduce a torque component at a critical frequency in a shaft of an electric machine connected to a load, the system comprising:
   a machine drive configured to control an electric power supplied to the electric machine based on a drive command generated by a current controller from a current reference signal;
   a speed sensor coupled to the shaft;
   an encoder signal processor unit configured to derive a speed and/or position of the shaft to a sufficiently high accuracy based on an output from the speed sensor; and
   a torque disturbance controller configured to generate a torque disturbance at the critical frequency based on the speed of the shaft derived by the encoder signal processor unit, the torque disturbance being combined to an output of the current controller.
11. The system according to clause 10, wherein the speed sensor is a standard encoder calibrated offline.
12. The system according to clause 10 or 11, further comprising:
   a data table stored in a signal-processing device to encode the calibrated angular displacement between each pulse of the speed sensor.
13. The system according to any of clauses 10 to 12, wherein, during online operation, the time between pulses is detected by a clock and compared to the calibration data.
14. The system according to any of clauses 10 to 13, wherein the speed of the shaft is determined at each pulse of the speed encoder.
15. The system according to any of clauses 10 to 14, wherein the torque disturbance controller includes tuned filters.
16. The system according to any of clauses 10 to 15, wherein the torque disturbance controller includes a combination of state estimators and state feedback matrices.
17. The system according to any of clauses 10 to 16, wherein the torque disturbance controller responds only to resonant mode frequencies of the shaft and introduces perturbations that are less than 2% of the output of the current controller.
18. The system according to the any of clauses 10 to 17, wherein the electric machine drives an oil and gas compressor or a wind turbine.
19. A torsional mode damping system to reduce a torque component at a critical frequency in the shaft of an electric machine connected to a load, the system comprising:
   a machine drive configured to control an electric power supplied to the electric machine based on a drive command generated by a current controller from a current reference signal;
   a contactless torque sensor disposed adjacent to the shaft;
   a signal conditioner configured to receive a torque signal from the contactless torque sensor; and
   a torque disturbance controller configured to generate a torque disturbance at the critical frequency based on the conditioned torque signal from the signal conditioner, the torque disturbance being superimposed to an output of the current controller.
20. The system according to clause 19, wherein the contactless torque sensor is based on a magnetostrictive effect.
21. The system according to clause 19 or 20, wherein the torque sensor is based on a magnetic encoding of the shaft.
22. The system according to any of clauses 19 to 21, wherein the signal conditioner filters out disturbances that have the same frequency as the speed or multiples of the speed of the shaft.
23. The system according to any of clauses 19 to 22, wherein the signal conditioner includes a band-pass filter.
24. The system according to any of clauses 19 to 23, further comprising:
   a second contactless torque sensor disposed 180° from the location of the first contactless torque sensor, wherein the signal conditioner subtracts the torque signals from the first and second contactless torque sensors in order to eliminate a disturbance with a frequency corresponding to a speed of the shaft.
25. The system according to any of clauses 19 to 24, wherein the torque disturbance is less than 2 % of a nominal torque output from the current controller.
26. The system according to any of clauses 19 to 25, wherein a frequency of the torque disturbance corresponds to the critical frequency of electric machine, the mechanical shaft, and the load.

## Claims

1. A torsional mode damping system (40) to reduce a torque component at a critical frequency in an output torque of an electric machine (16), the system comprising:
a machine drive configured to control an electric power supplied to the electric machine based on a drive command generated by a current controller (12) from a current reference signal;
a sensor configured to measure a machine current at the output of the machine drive;
a torque estimator processor configured to estimate an output torque from the machine current measured by the sensor; and
a torque disturbance controller (56) configured to generate a torque disturbance at the critical frequency combined to the current reference signal.

2. The system (40) according to claim 1, wherein the torque disturbance controller (56) further comprises a band-pass filter to generate the torque disturbance.

3. The system (40) according to claim 2, wherein a frequency of the band-pass filter is centered on the critical frequency.

4. The system (40) according to any preceding claim, wherein the electric machine (16) is coupled to a load (18) through a mechanical shaft (20).

5. The system (40) according to claim 4, wherein the electric machine (16), the load (18), and the mechanical shaft (20) form a weakly damped mechanical resonator.

6. The system (40) according to any preceding claim, wherein the torque estimator processor operates separately from a modulation process of the electric machine (16).

7. The system (40) according to any preceding claim, wherein the torque component is generated by a voltage harmonic disturbance in the modulation process.

8. The system (40) according to claim 6 or claim 7, wherein machine drive is a variable speed drive.

9. The system (40) according to any preceding claim, further comprising:
a second current reference signal (32), wherein the torque disturbance controller (56) is configured to generate a torque disturbance at the critical frequency combined to the current reference signal and the second current reference signal.

10. A torsional mode damping system (40) to reduce a torque component at a critical frequency in a shaft (20) of an electric machine (16) connected to a load (18), the system comprising:
a machine drive configured to control an electric power supplied to the electric machine based on a drive command generated by a current controller from a current reference signal (32);
a speed sensor coupled to the shaft;
an encoder signal processor unit (52) configured to derive a speed and/or position of the shaft to a sufficiently high accuracy based on an output from the speed sensor; and
a torque disturbance controller (56) configured to generate a torque disturbance at the critical frequency based on the speed of the shaft derived by the encoder signal processor unit, the torque disturbance being combined to an output of the current controller.

11. A torsional mode damping system (40) to reduce a torque component at a critical frequency in the shaft (20) of an electric machine (16) connected to a load (18), the system comprising:
a machine drive configured to control an electric power supplied to the electric machine based on a drive command generated by a current controller from a current reference signal (32);
a contactless torque sensor (72) disposed adjacent to the shaft (20);
a signal conditioner (74) configured to receive a torque signal from the contactless torque sensor; and
a torque disturbance controller (56) configured to generate a torque disturbance at the critical frequency based on the conditioned torque signal from the signal conditioner, the torque disturbance being superimposed to an output of the current controller.
